# EUROPÄISCHE PATENTSCHRIFT

(11) **EP 1 572 822 B1**
(45) Veröffentlichungstag und Bekanntmachung des Hinweises auf die Patenterteilung: **18.10.2006**
(21) Anmeldenummer: 03775329.0
(22) Anmeldetag: 11.11.2003
(51) Int. Cl.: C09J 7/00, C09J 153/00

(54) **HAFTKLEBEARTIKEL**
SELF-ADHESIVE ARTICLE
ARTICLE AUTO-ADHESIF

(30) Priorität: 05.12.2002 DE 10256782
(43) Veröffentlichungstag der Anmeldung: 14.09.2005
(73) Patentinhaber: tesa AG, 20253 Hamburg (DE)
(72) Erfinder: DOLLASE, Thilo, 22397 Hamburg (DE); HUSEMANN, Marc, 22605 Hamburg (DE)
(74) Vertreter: Stubbe, Andreas
(86) Internationale Anmeldenummer: PCT/EP2003/012543
(87) Internationale Veröffentlichungsnummer: WO 2004/050781

(56) Entgegenhaltungen:
- EP-A- 0 414 353
- EP-A- 1 201 724
- DE-A- 19 913 719
- US-A- 3 922 464
- US-A- 5 094 912
- US-A- 5 501 897
- US-A- 5 888 650
- US-B1- 6 228 449

## Beschreibung

Die Erfindung betrifft einen Haftklebeartikel, bestehend aus einem blatt- oder bandförmigen Träger, der auf mindestens einer Seite wenigstens teilweise mit einer druckempfindlichen Haftklebemasse auf Polyacrylatbasis beschichtet ist sowie zugehörige Blöcke aus diesen Artikeln.

Haftklebemassen zeichnen sich durch eine besondere Eigenschaft aus. Im Gegensatz zu lösungsmittelhaltigen Klebstoffen sind sie dauerhaft klebrig und haften an einer Vielzahl von Oberflächen beim bloßen Kontakt ohne großen Druck aufzubringen. Durch die fortschreitende Industrialisierung und dem Vorteil der inhärenten Klebrigkeit gegenüber konventionellen Klebstoffen werden Haftklebemassen in immer größerer Anzahl für die verschiedensten Haftklebebänder eingesetzt. Eine in der Automobilindustrie schon seit 80 Jahren bekannte Technologie ist der Lackierprozess unter der Verwendung von haftklebenden Papiermaskierungsstreifen. Die sehr unterschiedlichen Anforderungen können zum einen durch den Papierträger zum anderen aber auch durch die Haftklebemasse gesteuert werden. Als Haftklebemassen eignen sich z. B. Polyacrylate, auf Naturkautschuk oder auf Synthesekautschuk basierende Systeme. Jedes Haftklebesystem hat seine charakteristischen Vor- und Nachteile. Polyacrylate sind sehr witterungsstabil und können nach Vernetzung in einem weiten Temperaturbereich eingesetzt werden. Auf Naturkautschuk basierende Haftklebemassen sind sehr kostengünstig und auf Synthesekautschuk basierende Haftklebemassen weisen eine sehr hohe Klebkraft und Tack auf.

Eine weitere sehr verbreitete Anwendung sind Haftnotizzettel, die nach der Verklebung wieder rückstandsfrei von z.B. Papier entfernbar sind, ohne dass es dabei einreißt. Diese Papierstreifen sind bereits seit etwa 25 Jahren bekannt. Zum Erzielen einer solchen Eigenschaft bedarf es besonderer Haftklebemassen. In DE 23 27 452 werden Perlpolymerisate beschrieben, die einem selbstklebenden System eine solche Eigenschaft verleihen. Diese Perlpolymerisate enthalten aber Emulgatoren, die die Wasserbeständigkeit der Haftklebemasse deutlich herabsetzen. Dies stellt insbesondere bei sehr hoher Luftfeuchtigkeit ein Problem dar. Weiterhin ist im Produktionsprozess das nach der Trocknung abgedampfte Wasser mit Restmonomeren kontaminiert, was wiederum einen aufwendigen Aufreinigungsschritt nach sich zieht.

Eine weitere Möglichkeit zur Herstellung von Haftnotizzetteln besteht darin, die Klebkraft durch gezieltes, stellenweises fortlassen der Haftklebemasse zu verringern. Eine solche "Strukturierung" der Haftklebemasse kann beispielsweise durch einen Siebdruck der Acrylathaftklebemasse auf den Träger erzielt werden. Dadurch verringert sich die Verklebungsfläche und die Klebkraft, so dass diese Haftnotizzettel rückstandsfrei wieder entfernbar sind. Der Nachteil dieses Verfahrens sind aufwendige Produktionsanlagen gegenüber dem konventionellen vollflächigen Auftragen. Für die Herstellung von konventionellen Haftklebemassen werden daher nach wie vor vollflächige Auftragsverfahren benötigt, so dass ein Bedarf für vollflächig auftragbare Haftklebemassen für leicht und rückstandsfrei wieder ablösbare Artikel besteht.

Die Aufgabe der Erfindung besteht daher darin, einen leicht, vollständig und rückstandsfrei wieder ablösbaren Haftklebeartikel, insbesondere in Form von Haftklebeblättern für Notizblöcke, zur Verfügung zu stellen, der die Nachteile im Stand der Technik vermeidet.

Zur Lösung der Aufgabe ist vorgesehen, dass bei einem Haftklebeartikel der eingangs genannten Art eine Haftklebemasse verwendet wird, die wenigstens ein Polyacrylat-Blockcopolymer enthält, das eine Abfolge von harten Polymerblöcken [P(A)] mit einer Glasübergangstemperatur von nicht mehr als 10 °C und von weichen Polymerblöcken [P(B)] mit einer Glasübergangstemperatur von nicht weniger als 10 °C aufweist. Weitere Ausgestaltungen des erfindungsgemäßen Haftklebeartikels sind in den Unteransprüchen gekennzeichnet.

Die Gewichtsanteile der Blockcopolymere sollten in Summe zumindest 50 % der Haftklebemasse ausmachen

Überraschenderweise und für den Fachmann nicht vorhersehbar wurde gefunden, dass die erfindungsgemäß verwendete Haftklebemasse im vollflächigen Verfahren aufgetragen werden kann und dabei von selbst eine Mikrostrukturierung durch Selbstorganisation erzeugt. Dabei bewirken die "harten" Domänen, die durch die Polymerblöcke mit einer niedrigen Erweichungs- bzw. Glasübergangstemperatur (T_{G}) gebildet werden, die Ausbildung kleinster kaum bis nicht-klebender Bereiche und die "weichen" Domänen, die durch die Polymerblöcke mit einer höheren Erweichungs- bzw. Glasübergangstemperatur (T_{G}) gebildet werden, die Ausbildung kleinster klebender Bereiche. Durch diese Mikrostrukturierung werden die Anforderungen an die geringere Klebkraft und die damit verbundene vollständige Wiederablösbarkeit, die für Haftklebezettel gefordert wird, erfüllt.

Die erfindungsgemäß eingesetzten Blockcopolymere sind gekennzeichnet durch eine Abfolge von "harten" Polymerblöcken [P(A) oder P(A/C)] mit einer niedrigen Erweichungs-/Glasübergangstemperatur und "weichen" Polymerblöcken [P(B) oder P(B/D)] mit einer hohen Glasübergangs/Erweichungstemperatur, wobei die Blockcopolymere vorteilhaft zumindest eine Triblockcopolymerstruktur [P(A)-P(B)-P(A) und/oder P(B)-P(A)-P(B), wobei jeweils P(A) durch P(A/C) und/oder P(B) durch P(B/D) substituiert sein kann, aufweisen. P(A/C) und P(B/D) bezeichnen dabei Polymerblöcke, die als Copolymer aus A und C bzw. B und D aufgebaut sind. Einige vorteilhafte Ausführungsformen, sind im folgenden beispielhaft dargestellt.

Als Haftklebemassen lassen sich beispielsweise hervorragend solche Haftklebemassen auf der Basis von Blockcopolymeren des allgemeinen Typs P(B)-P(A/C)-P(B) einsetzen, bei denen jedes Blockcopolymer aus einem mittleren Copolymer-Block P(A/C) und zwei Endpolymerblöcken P(B) besteht, wobei
- P(A/C) ein Copolymer aus den Monomeren A und C repräsentiert, wobei P(A/C) eine Erweichungs/Glasübergangstemperatur von unter 10 °C, vorzugsweise 0 °C bis -80 °C besitzt, wobei die Komponente C bevorzugt weiterhin mindestens eine funktionelle Gruppe besitzt, welche sich in einer radikalischen Polymerisationsreaktion inert verhält, und welche zur Steigerung der Kohäsion des Blockcopolymers dient,
- P(B) ein Polymer aus den Monomeren B repräsentiert, wobei P(B) eine Erweichungs-/Glasübergangstemperatur von wenigstens 10 °C, vorzugsweise 20 °C bis 175 °C besitzt,
- der Polymer-Block P(B) in dem Copolymer-Block P(A/C) unlöslich ist und die Blöcke P(B) und P(A/C) nicht mischbar sind.

Unter Erweichungstemperatur soll hier eine Glasübergangstemperatur für amorphe Systeme und eine Schmelztemperatur bei semikristallinen Polymeren verstanden werden. Die hier angegebenen Temperaturen entsprechen solchen, die aus quasistationären Experimenten, wie z.B. DSC, erhalten werden.

Dabei kann in günstiger Weise die kohäsionssteigernde Wirkung des Copolymers P(A/C) durch Bindungen zwischen den einzelnen Blockcopolymeren P(B)-P(A/C)-P(B) hervorgerufen werden, wobei die funktionellen Gruppen, die vorzugsweise an der Komponente C eines Blockcopolymer-Makromoleküls gebunden sind, mit zumindest einem weiteren Blockcopolymer-Makromolekül in Wechselwirkung treten. In besonders vorteilhafter Weise ruft die funktionelle Gruppe der Komponente C mittels Dipol-Dipol-Wechselwirkungen und/oder Wasserstoffbrückenbindungen die Steigerung der Köhasion hervor. Besonders bevorzugt ist die funktionelle Gruppe der Komponente C eine Carbonsäuregruppe, eine Hydroxygruppe oder eine tert.-Butylgruppe. Weiter besonders bevorzugt wird als Komponente C zumindest eine Verbindung aus der folgenden Gruppe eingesetzt: Acrylsäure, Hydroxyethylacrylat, Hydroxypropylacrylat, Methacrylsäure, Methylmethacrylat, Hydroxyethylmethacrylat, Hydroxypropylmethacrylat, tert.-Butylacrylat, Itaconsäureanhydrid, Itaconsäure, Acrylamide, wie z.B. N-tert.-Butylacrylamid , N-Isopropylacrylamid oder Dimethylacrylamid, und Maleinsäureanhydrid.
Die funktionellen Gruppen der Komponente C können auch zur Vernetzung befähigte Gruppen sein, vorzugsweise ungesättigte Gruppen, welche insbesondere zur strahlenchemischen Vernetzung befähigt sind, wobei eine Vernetzung, welche durch UV-Bestrahlung oder durch Bestrahlung mit Elektronenstrahlen hervorgerufen wird, bevorzugt wird. Es hat sich als günstig herausgestellt, wenn die zur Vernetzung befähigte funktionelle Gruppe der Komponente C ein ungesättigter Alkylrest mit 3 bis 8 Kohlenstoffatomen ist, welcher mindestens eine C-C-Doppelbindung aufweist. Weiterhin besonders bevorzugt ist die zur Vernetzung befähigte funktionelle Gruppe der Komponente C eine solche Gruppe, welche durch den Einfluß thermischer Energie zu einer Vernetzungsreaktion befähigt ist. Vorteilhaft wird die funktionelle Gruppe der Komponente C als Hydroxy-, Carboxy-, Epoxy-, Säureamid-, Isocyanato- oder Aminogruppe gewählt.

Als Monomere für die Komponente C kann in günstiger Weise zumindest eine Verbindung der folgenden allgemeinen Formel 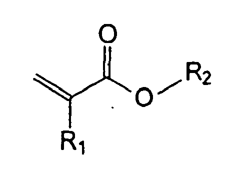 eingesetzt werden, wobei R₁ = H oder CH₃ und -OR₂ die funktionelle Gruppe nach einem der oberen Ansprüche darstellt oder beinhaltet als Komponente C zumindest eine Verbindung eingesetzt wird, Dabei kann die Komponente C derart gewählt werden, dass sie die Erweichungs-/Glasübergangstemperatur des Copolymer-Blocks P(A/C) auf T_{G} < 0 °C herabsetzt.

Als Komponente A wird bevorzugt zumindest eine Verbindung der folgenden allgemeinen Formel 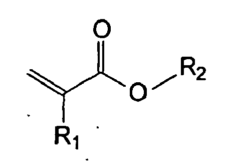 eingesetzt wird, wobei R₁ = H oder CH₃ und R₂ aus der Gruppe der verzweigten oder unverzweigten, gesättigten Alkylgruppen mit 4 - 14 Kohlenstoffatomen.

Als Komponente B werden die Monomere bevorzugt derart ausgewählt, daß die entstehenden Polymer-Blöcke P(B) in der Lage sind, eine 2-Phasen-Domänenstruktur mit den Copolymer-Blöcken P(A/C) auszubilden. Der Anteil der Polymerblöcke P(B) liegt sehr bevorzugt zwischen 10 und 60 Gew.-%, insbesondere zwischen 15 und 40 Gew.-% des gesamten Blockcopolymers.
Weiterhin liegt der Gewichtsanteil der Komponente C im Verhältnis zur Komponente A vorteilhaft zwischen 0,1 und 20, insbesondere zwischen 0,5 und 5.

Eine weitere Haftklebemasse, welche in hervorragender Art und Weise im erfinderischen Sinne verwendet werden kann, basiert auf Blockcopolymere des allgemeinen Typs P(A)-P(B)-P(A) oder des Typs P(A/C)-P(B)-P(A/C), wobei jedes Blockcopolymer aus einem mittleren (Co-)Polymerblock P(B) und zwei End(co)polymerblöcken P(A) bzw. P(A/C) besteht und dadurch gekennzeichnet ist, dass
- P(A) ein Polymer, das aus zumindest einem Monomer A besteht, repräsentiert, wobei P(A) eine Erweichungs-/Glasübergangstemperatur von 0 °C oder tiefer besitzt, bzw. P(A/C) ein Copolymer aus den Monomeren A und C repräsentiert, wobei P(A/C) eine Erweichungs-/Glasübergangstemperatur von 0 °C oder tiefer besitzt, wobei die Komponente C vorzugsweise mindestens eine funktionelle Gruppe besitzt, welche sich in einer radikalischen Polymerisationsreaktion inert verhält, und welche zur Steigerung der Kohäsion des Blockcopolymers dient,
- P(B) ein Polymer aus zumindest einem Monomer B repräsentiert, wobei P(B) eine Erweichungs-/Glasübergangstemperatur von 20 °C oder höher besitzt,
- der (Co-)Polymerblock P(B) in dem (Co-)Polymerblock P(A) bzw. P(A/C) unlöslich ist, die Blöcke P(B) und P(A) nicht mischbar sind.

Bevorzugt enthält die Komponente C zumindest eine funktionelle Gruppe, welche sich in einer radikalischen Polymerisationsreaktion inert verhält, und welche zur Erhöhung der Kohäsion des Blockcopolymers dient; insbesondere durch Bindungen zwischen den einzelnen Blockcopolymeren, wobei die funktionelle Gruppe der Komponente C eines Blockcopolymer-Makromoleküls mit zumindest einem weiteren Blockcopolymer-Makromolekül in Wechselwirkung tritt; insbesondere durch eine Vernetzungsreaktion. Die zur funktionelle Gruppe zur Erhöhung der Kohäsion kann sehr vorteilhaft eine Hydroxy-, eine Carboxy-, eine Epoxy-, eine Säureamid-, eine lsocyanato- oder eine Aminogruppe, eine einen Photoinitiator zur UV-Vernetzung beinhaltende Gruppe oder eine ungesättigte Gruppe sein.

Weiter vorteilhaft besitzt der Block P(A) bzw. P(A/C) eine Erweichungs-/Glasübergangstemperatur zwischen -80 °C und 0 °C und/oder der Block P(B) eine Erweichungs-/Glasübergangstemperatur zwischen 25 °C und 180 °C.
Bevorzugt liegt der Anteil der (Co-)Polymerblöcke P(B) zwischen 10 und 60 Gew.-%, insbesondere zwischen 15 und 40 Gew.-% des gesamten Blockcopolymers.
In günstiger Weise liegt der Gewichtsanteil der Komponente C im Verhältnis zur Komponente A zwischen 0,1 und 20, insbesondere zwischen 0,5 und 10.

Eine weitere vorteilhaft verwendbare Haftklebemasse ist eine solche auf Basis von Blockcopolymeren des allgemeinen Typs P(B/D)-P(A)-P(B/D), wobei jedes Blockcopolymer aus einem mittleren Copolymer-Block P(A) und zwei Endpolymerblöcken P(B/D) besteht, dadurch gekennzeichnet, daß
- P(A) ein Polymer aus den Monomeren A repräsentiert, welches eine Erweichungs-/Glasübergangstemperatur von 0 °C bis -80 °C besitzt, wobei die Komponente A ein oder mehrere Monomere umfassen kann, und wobei die Erweichungs-/Glasübergangstemperatur des Blocks P(A) unterhalb 0 °C liegt.
- P(B/D) ein Polymer aus zumindest zwei Monomeren B und D repräsentiert, wobei der Block P(B/D) eine Erweichungs-/Glasübergangstemperatur von 20 °C bis 175 °C besitzt, und wobei die Komponente D zumindest eine zur Vernetzung befähigte funktionelle Gruppe enthält,
- der Polymer-Block P(A) in dem Copolymer-Block P(B/D) unlöslich ist, die Blöcke P(A) und P(B/D) nicht mischbar sind.

Hierbei ist vorteilhaft die zur Vernetzung befähigte funktionelle Gruppe der Komponente D eine ungesättigte Gruppe ist, welche vorzugsweise zur strahlenchemischen Vernetzung befähigt ist, insbesondere zu einer Vernetzung, welche durch UV-Bestrahlung oder durch Bestrahlung mit Elektronenstrahlen hervorgerufen wird. Dies kann bevorzugt ein ungesättigter Alkylrest sein, welcher mindestens eine C-C-Doppelbindung aufweist. Die zur Vernetzung befähigte funktionelle Gruppe der Komponente D kann weiterhin vorteilhaft eine solche Gruppe sein, welche durch den Einfluss thermischer Energie zu einer Vernetzungsreaktion befähigt ist. Als funktionelle Gruppe der Komponente D kann vorteilhaft eine Hydroxy-, eine Carboxy- , eine Epoxy-, eine Säureamid-, eine Isocyanato-oder eine Aminogruppe gewählt werden.

Als Komponente D wird in einem bevorzugten Ausführungsbeispiel zumindest eine Verbindung eingesetzt, welche die Erweichungs-/Glasübergangstemperatur des Copolymer-Blocks P(B/D) auf T_{G} > 20 °C heraufsetzt.
Als Komponenten B und D werden bevorzugt Monomere gewählt, die dazu führen, daß der Block P(B/D) in der Lage ist, eine 2-Phasen Domänenstruktur mit den Copolymer-Block P(A) auszubilden, wobei B und D auch identisch sein können.
Vorteilhaft liegt der Anteil der Polymerblöcke P(B/D) zwischen 10 und 60 Gew.-%, insbesondere zwischen 15 und 40 Gew.-% des gesamten Blockcopolymers liegt. Weiter vorteilhaft liegt der Gewichtsanteil der Komponente D im Verhältnis zur Komponente B zwischen 0,1 und 20, insbesondere zwischen 0,5 und 5.

Die bei der Erfindung verwendeten Acrylatblockcopolymere sind vorzugsweise in sich orientiert. Hierdurch besitzen die erhaltenen Haftklebemassen eine Vorzugsrichtung, wobei der in Vorzugsrichtung gemessene Brechungsindex n_{MD} größer ist als der in einer Richtung senkrecht zur Vorzugsrichtung gemessene Brechungsindex n_{CD}.

Insbesondere bevorzugt beträgt die Differenz Δn = n_{MD} - n_{CD} mindestens 1 • 10⁻⁵. Weiterhin vorteilhaft weist die Haftklebemasse einen Rückschrumpf von zumindest 5 % auf, gemessen wie folgt:
Die Haftklebemasse wird aus der Schmelze durch eine Düse auf ein silikonisertes Trennpapier beschichtet. Parallel zur Beschichtungsrichtung des Hotmelts werden Streifen von mindestens 30 mm Breite und 20 cm Länge geschnitten. Bei Masseaufträgen von 130 g/m² werden je 3 Streifen, bei 50 g/m² 8 Streifen übereinander laminiert, um vergleichbare Schichtdicken zu erhalten. Der derart erhaltene Körper wird dann auf exakt 20 mm Breite geschnitten und an den jeweiligen Enden in einem Abstand von 15 cm mit Papierstreifen überklebt. Der auf diese Weise präparierte Prüfkörper wird dann bei Raumtemperatur vertikal aufgehängt und die Änderung der Länge über die Zeit verfolgt, bis keine weitere Schrumpfung der Probe mehr festgestellt werden kann. Die um den Endwert reduzierte Ausgangslänge wird dann bezogen auf die Ausganglänge als Rückschrumpf in Prozent angegeben.

Durch die Orientierung kann die Klebkraft nochmals reduziert und somit die Reversibilität des erfinderischen Produktes verbessert werden.

Vorteilhaft läßt sich der Aufbau zumindest eines Blockcopolymers durch eine oder mehrere der folgenden allgemeinen Formeln beschreiben:

P(B)-P(A)-P(B) (I)

P(A)-P(B)-P(A)-P(B)-P(A) (II)

[P(A)-P(B)]ₙX (III)

[P(A)-P(B)]ₙX[P(B)]ₘ (IV),

- wobei n = 3 bis 12, m = 3 bis 12 und X einen multifunktionellen Verzweigungsbereich darstellt
- wobei die Polymerblöcke P(B) unabhängig voneinander Homo- oder Copolymerblöcke aus den Monomeren B repräsentieren, wobei die Polymerblöcke P(B) jeweils eine Erweichungstemperatur im Bereich von + 20 °C bis + 175°C aufweisen,
- und wobei die Polymerblöcke P(A) unabhängig voneinander Homo- oder Copolymerblöcke aus den Monomeren A repräsentieren, wobei die Polymerblöcke P(A) jeweils eine Erweichungstemperatur im Bereich von - 130 °C bis + 10 °C aufweisen.

Weiter vorteilhaft weist zumindest ein Blockcopolymer einen symmetrischen Aufbau derart auf, dass in der Kettenlänge und/oder der chemischen Struktur identische Polymerblöcke P(B) und/oder dass in der Kettenlänge und/oder der chemischen Struktur identische Polymerblöcke P(A) vorliegen.

In einer bevorzugten Ausführungsform der erfindungsgemäß verwendeten Haftklebemassen weisen diese in Längs- und in Querrichtung ein unterschiedliches Zug/Dehnungsverhalten auf.

Es ist günstig, wenn zumindest ein Blockcopolymer eines oder mehrere der folgenden Kriterien aufweist:
- eine Molmasse Mₙ zwischen 25.000 und 600.000 g/mol, bevorzugt zwischen 30.000 und 400.000 g/mol, besonders bevorzugt zwischen 50.000 und 300.000 g/mol,
- eine Polydispersität D = M_{w}/Mₙ von nicht mehr als 3,
- einen Anteil der Polymerblöcke P(B) zwischen 5 und 49 Gew.-%, bevorzugt zwischen 7,5 und 35 Gew.-%, insbesondere zwischen 10 und 30 Gew.-%, bezogen auf die Triblockcopolymerzusammensetzung
- ein oder mehrere aufgepropfte Seitenketten.

Insbesondere kann das Verhältnis der Kettenlängen der Polymerblöcke P(B) zu denen der Polymerblöcke P(A) so gewählt werden, daß die Polymerblöcke P(B) als disperse Phase ("Domänen") in einer kontinuierlichen Matrix der Polymerblöcke P(A) vorliegen, insbesondere als kugelförmige oder verzerrt kugelförmige oder zylinderförmige Domänen.

So lässt sich hervorragend ein Polymerblend mehrerer Blockcopolymere entsprechend den vorstehenden Ausführungen einsetzen, weiterhin auch Blend eines oder mehrerer Blockcopolymere entsprechend der vorstehenden Ausführungen mit zumindest einem Diblockcopolymer P(B)-P(A),
- wobei die Polymerblöcke P(B) unabhängig voneinander Homo- oder Copolymerblöcke aus den Monomeren B repräsentieren, wobei die Polymerblöcke P(B) jeweils eine Erweichungstemperatur im Bereich von + 20°C bis + 175 °C aufweisen,
- und wobei die Polymerblöcke P(A) unabhängig voneinander Homo- oder Copolymerblöcke aus den Monomeren A repräsentieren, wobei die Polymerblöcke P(A) jeweils eine Erweichungstemperatur im Bereich von - 130 °C bis + 10°C aufweisen, und/oder mit zumindest einem Polymeren P'(B) und/oder P'(A),
- wobei die Polymere P'(B) Homo- und/oder Copolymere aus den Monomeren B repräsentieren, wobei die Polymere P'(B) jeweils eine Erweichungstemperatur im Bereich von + 20 °C bis + 175 °C aufweisen,
- wobei die Polymere P'(A) Homo- und/oder Copolymere aus den Monomeren A repräsentieren, wobei die Polymere P'(A) jeweils eine Erweichungstemperatur im Bereich von - 130 °C bis + 10 °C aufweisen.

Weiterhin hervorragend im Rahmen der Erfindung einsetzbar ist ein Blend aus zumindest zwei Komponenten K1 und K2, jede Komponente basierend auf zumindest einem Blockcopolymer P1 beziehungsweise P2 einsetzen,
- wobei das zumindest eine Blockcopolymer P1 der Komponente K1 mindestens die Einheit P(B1)-P(A1)-P(B1) aus wenigstens einem Polymerblock P(A1) und wenigstens zwei Polymerblöcken P(B1) aufweist, wobei
   - P(B1) unabhängig voneinander Homo- oder Copolymerblöcke aus Monomeren B1 repräsentiert, wobei die Polymerblöcke P(B1) jeweils eine Erweichungstemperatur im Bereich von + 20 °C bis + 175°C aufweisen, P(A1) einen Homo- oder Copolymerblock aus Monomeren A1 repräsentiert, wobei der Polymerblock P(A1) eine Erweichungstemperatur im Bereich von - 130 °C bis +10°C aufweist,
   - die Polymerblöcke P(B1) und P(A1) nicht homogen miteinander mischbar sind,
- wobei das zumindest eine Blockcopolymer P2 der Komponente K2 mindestens die Einheit P(A2)-P(B2)-P(A2) aus wenigstens zwei Polymerblöcken P(A2) und wenigstens einem Polymerblock P(B2) aufweist, und wobei
   - P(B2) einen Homo- oder Copolymerblock aus Monomeren B2 repräsentiert, wobei der Polymerblock P(B2) eine Erweichungstemperatur im Bereich von + 20 °C bis + 175 °C aufweisen,
   - P(A2) unabhängig voneinander Homo- oder Copolymerblöcke aus Monomeren A2 repräsentiert, wobei die Polymerblöcke P(A2) jeweils eine Erweichungstemperatur im Bereich von - 130 °C bis + 10°C aufweist,
   - die Polymerblöcke P(B2) und P(A2) nicht homogen miteinander mischbar sind,
- und wobei der Blend ein zumindest zweiphasiges System ausbildet.

Vorteilhaft beträgt das Verhältnis V der im Blend eingesetzten Menge m_{K2} der Komponente K2 zu der im Blend eingesetzten Menge m_{K1} der Komponente K1 bis zu 250 Gewichtsteile K2 auf 100 Gewichtsteile K1, also V = m_{K2}/m_{K1} ≤ 2,5.

Bevorzugt sind die Blöcke P(B1) mit den Blöcken P(B2) und/oder deren jeweils korrespondierenden Polymere P'(B1) mit P'(B2) und/oder die Blöcke P(A1) mit den Blöcken P(A2) und/oder deren jeweils korrespondierenden Polymere P'(A1) mit P'(A2) verträglich.
Weiter vorteilhaft besitzen die Polymerblöcke P(B1) und die Polymerblöcke P(B2) und/oder die Polymerblöcke P(A1) und die Polymerblöcke P(A2) eine identische Homo- und/oder Copolymerzusammensetzung.
Es ist günstig, wenn die mittlere Kettenlänge LA2 der Polymerblöcke P(A2) des Blockcopolymers P2 die mittlere Kettenlänge LA1 des Polymerblocks P(A1) des Blockcopolymers P1 nicht übersteigt, wobei vorteilhaft LA2 mindestens 10 % kleiner als LA1, sehr vorteilhaft LA2 mindestens 20 % kleiner ist als LA1 ist.
Weiterhin ist es von Vorteil, wenn die Polymerblöcke P(Bi) (i = 1,2,...) als disperse Phase ("Domänen") in einer kontinuierlichen Matrix der Polymerblöcke P(Ai) vorliegen, bevorzugt als kugelförmige oder verzerrt kugelförmige Domänen, wobei dieser Zustand insbesondere durch Einstellung des Verhältnisses V_{Li} der mittleren Kettenlängen LBi der Polymerblöcke P(Bi) zu den mittleren Kettenlängen LAi der Polymerblöcke P(Ai) der Blockcopolymere Pi erzielt wird, sehr bevorzugt durch Einstellung des Verhältnisses V_{L1} des Blockcopolymers P1.

Neben den vorstehend besonders geeigneten Haftklebemassen seien auch noch diejenigen erwähnt, welche Sternstrukturen aufweisen, etwa entsprechend

[P(A)-P(B)]ₙX

[P(B)-P(A)]ₙX

[P(B)-P(A)-P(B)]ₙX

[P(A)-P(B)-P(A)]ₙX

oder allgemein 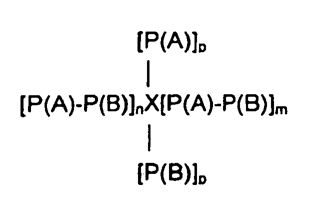 wobei m, n, p, q unabhängig voneinander = 0, 1, 2, 3... und X eine multifunktionelle Verzweigungseinheit darstellt, also ein chemisches Bauelement, über das mehrere Polymerarme miteinander verknüpft sind.
Dabei können auch mehrere Verzweigungseinheiten in den Polymeren vorhanden sein.

Als Monomere A für die Copolymerblöcke P(A) und/oder P(A/C) der erfindungsgemäß verwendeten Haftklebemassen werden vorteilhaft Acrylmonomere oder Vinylmonomere eingesetzt, besonders bevorzugt solche, die die Erweichungs-/Glasübergangstemperatur des Copolymerblocks P(A/C) - auch in Kombination mit Monomer C - auf unterhalb 10 °C, sehr bevorzugt unterhalb 0 °C herabsetzen.
In sehr vorteilhafter Weise für die erfindungsgemäße Haftklebemasse wird als Komponente A eine oder mehrere Verbindungen, welche sich durch die folgende allgemeinen Formel beschreiben lassen, eingesetzt.

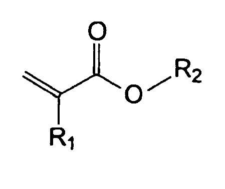

Dabei ist R₁ = H oder CH₃, der Rest R₂ wird gewählt aus der Gruppe der verzweigten oder unverzweigten, gesättigten Alkylgruppen mit 4 bis 14 Kohlenstoffatomen.

Acrylmomonere, die bevorzugt für die erfinderische Haftklebemasse als Komponente A eingesetzt werden, umfassen Acryl- und Methacrylsäureester mit Alkylgruppen bestehend aus 4 bis 14 C-Atomen, bevorzugt 4 bis 9 C-Atomen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat und deren verzweigten isomere, wie z.B. 2-Ethylhexylacrylat.
Weiterhin werden optional als Monomer A Vinylmonomere aus den folgenden Gruppen eingesetzt:
Vinylester, Vinylether, Vinylhalogenide, Vinylidenhalogenide, Vinylverbindungen mit aromatischen Cyclen und Heterocyclen in α-Stellung.
Auch hier seien nicht ausschließlich einige Beispiele genannt: Vinylacetat, Vinylformamid, Vinylpyridin, Ethylvinylether, Vinylchlorid, Vinylidenchlorid, Acrylonitril.

Die Monomere B für die Copolymerblöcke P(B) und/oder P(B/D) der erfindungsgemäß verwendeten Haftklebemassen werden bevorzugt derart gewählt, daß die resultierenden Blöcke P(B) und/oder P(B/D) in der Lage sind, eine 2-Phasen-Domänenstruktur mit den Copolymer-Blöcken P(A) und/oder P(A/C) auszubilden. Voraussetzung hierfür ist die Nichtmischbarkeit der Blöcke P(B) bzw. P(B/D) mit den Blöcken P(A) bzw. P(A/C). In der 2-Phasen-Domänenstruktur bilden sich Bereiche aus, in welchen sich die Blöcke unterschiedlicher (und gegebenenfalls auch gleicher) Ketten ein- und derselben Monomerensorte miteinander mischen. Diese sogenannten Domänen sind eingebettet in einer Matrix der Blöcke der anderen Monomerensorte. Als Charakteristikum besitzt eine solche 2-Phasen-Domänenstruktur zwei Erweichungs-/Glasübergangstemperaturen.
Mit der Ausbildung zweier Phasen unterschiedlicher Eigenschaften erhält man harte Volumenelemente neben weichen Volumenelementen.
Vorteilhafte Beispiele für Verbindungen, welche als Komponente B eingesetzt werden, sind Vinylaromaten, Methylmethacrylate, Cyclohexylmethacrylate, Isobornylmethacrylate. Besonders bevorzugte Beispiele für die Komponente B sind Methylmethacrylat und Styrol.

Als Monomere C werden in bevorzugter Weise Acrylmonomere oder Vinylmonomere eingesetzt, die die Erweichungs-/Glasübergangstemperatur des Copolymerblocks P(A/C) - auch in Kombination mit Monomer A - auf unterhalb 0 °C herabsetzen. In einer vorteilhaften Variante des erfindungsgemäßen Verfahrens werden Acrylmonomere eingesetzt, insbesondere solche entsprechend der folgenden allgemeinen Formel: 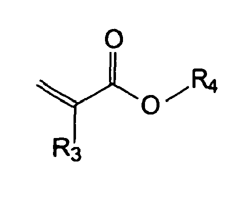 wobei R₃ = H oder CH₃ ist und der Rest -OR₄ die funktionelle Gruppe zur Erhöhung der Kohäsion der Haftklebemasse darstellt oder beinhaltet.
Besonders bevorzugte Beispiele für die Komponente C sind acrylierte Photoinitiatoren, wie z.B. Benzoinacrylat oder acryliertes Benzophenon, weiterhin Hydroxyethylacrylat, Hydroxypropylacrylat, Hydroxyethylmethacrylat, Hydroxypropylmethacrylat, Acrylsäure, Methacrylsäure, Methylmetacrylat, t-Butylacrylat, Allylalkohol, Maleinsäureanhydrid, ltaconsäureanhydrid, Itaconsäure, Acrylamide (wie beispielsweise N-t-Butylacrylamid, N-Isopropylacrylamid, Dimethylacrylamid) und Glyceridylmethacrylat, wobei diese Aufzählung nicht abschließend ist.
Dabei werden bevorzugt gewählt:
a) für Dipol-Dipol-Wechselwirkungen- und/oder Wasserstoffbrücken-bildenden Eigenschaften:
   Acrylsäure, Methacrylsäure, Itaconsäure, aber auch Hydroxyethylacetat, Hydroxypropylacetat, Allylalkohol, Acrylamide, Hydroxyethylmetacrylat, Methylmethacrylat
b) zur Vernetzung mit energiereicher Strahlung:
   Benzoinacrylat, acryliertes Benzophenon
c) zur thermischen Vernetzung:
   Hydroxyethylacrylat, Hydroxypropylacrylat, Hydroxyethylmethacrylat, Hydroxypropylmethacrylat, Acrylsäure, Methacrylsäure, Allylalkohol, Maleinsäureanhydrid, ltaconsäureanhydrid, Itaconsäure, Glyceridylmethacrylat, aber auch alle Acrylamide.

Mit t-Butylacrylat und beispielsweise Stearylacrylat wird eine zusätzliche Steigerung der Erweichungs-/Glasübergangstemperatur bewirkt. Diese daraus resultierenden Polymere weisen ein höheres Molekulargewicht und eine eingeschränkte Beweglichkeit auf.

Die Polymerisation kann nach einem an sich bekannten Verfahren oder in Abwandlung eines an sich bekannten Verfahrens durchgeführt werden, insbesondere durch konventionelle radikalische Polymerisation und/oder durch kontrollierte radikalische Polymerisation; letztere ist dabei durch die Anwesenheit geeigneter Kontrollreagenzien gekennzeichnet.

Zur Herstellung der Blockcopolymere können prinzipiell alle kontrolliert oder lebend verlaufenden Polymerisationen eingesetzt werden, ebenso auch Kombinationen verschiedener kontrollierter Polymerisationsverfahren. Hierbei seien z. B., ohne Anspruch auf Vollständigkeit, neben der anionischen Polymerisation die ATRP, die Nitroxid/TEMPO- kontrollierte Polymerisation oder mehr bevorzugt der RAFT-Prozess genannt, also insbesondere solche Verfahren, die eine Kontrolle der Blocklängen, Polymerarchitektur oder auch, aber nicht notwendigerweise, der Taktizität der Polymerkette erlauben.

Radikalische Polymerisationen können in Gegenwart eines organischen Lösungsmittels oder in Gegenwart von Wasser oder in Gemischen aus organischen Lösungsmitteln und/oder organischer Lösungsmittel mit Wasser oder in Substanz durchgeführt werden. Bevorzugt wird so wenig Lösungsmittel wie möglich eingesetzt. Die Polymerisationszeit für radikalische Prozesse beträgt - je nach Umsatz und Temperatur - typischerweise zwischen 4 und 72 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan, n-Heptan oder Cyclohexan), Ketone (wie Aceton oder Methylethylketon), Siedegrenzenbenzin, aromatische Lösungsmittel wie Toluol oder Xylol oder Gemische vorgenannter Lösungsmittel verwendet. Für die Polymerisation in wäßrigen Medien beziehungsweise Gemischen aus organischen und wäßrigen Lösungsmitteln werden zur Polymerisation bevorzugt Emulgatoren und Stabilisatoren zugesetzt.

Weiterhin vorteilhaft kann das erfindungsgemäße genutzte Blockcopolymer über eine anionische Polymerisation hergestellt werden. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird im allgemeinen durch die Struktur P_{L}(A)-Me repräsentiert, wobei Me ein Metall der Gruppe I, wie z.B. Lithium, Natrium oder Kalium, und P_{L}(A) ein wachsender Polymerblock aus den Monomeren A. Die Molmasse des herzustellenden Polymerblocks wird durch das Verhältnis von Initiatorkonzentration zu Monomerkonzentration vorgegeben. Zum Aufbau der Blockstruktur werden zunächst die Monomere A für den Aufbau eines Polymerblocks P(A) hinzugegeben, dann wird anschließend durch Zugabe der Monomere B ein Polymerblock P(B) angeknüpft und nachfolgend durch erneute Zugabe von Monomeren A ein weiterer Polymerblock P(A) anpolymerisiert, so daß ein Triblockcopolymer P(A)-P(B)-P(A) entsteht. Alternativ kann P(A)-P(B)-M durch eine geeignete difunktionelle Verbindung gekuppelt werden. Auf diesem Weg sind auch Stemblockcopolymere (P(B)-P(A))ₙ zugänglich. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyt-1,4-ditithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Findet eine Methode der radikalischen Polymerisation Anwendung, werden als Polymerisationsinitiatoren vorteilhaft übliche radikalbildende Verbindungen wie beispielsweise Peroxide, Azoverbindungen und Peroxosulfate eingesetzt. Auch Initiatorengemische eignen sich hervorragend.

Zur Radikalstabilisierung werden in günstiger Vorgehensweise Nitroxide des Typs (NIT 1) oder (NIT 2) eingesetzt: 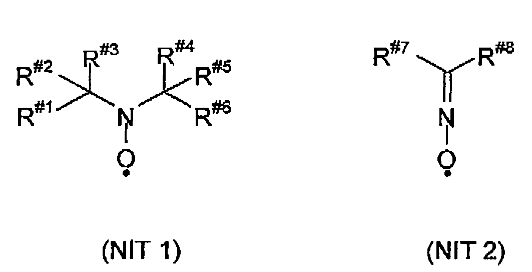 wobei R^{#1}, R^{#2}, R^{#3}, R^{#4}, R^{#5}, R^{#6}, R^{#7}, R^{#8} unabhängig voneinander folgende Verbindungen oder Atome bedeuten:
i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester -COOR^{#9}, Alkoxide -OR^{#10} und/oder Phosphonate -PO(OR^{#11})₂,
wobei R^{#9}, R^{#10} und/oder R^{#11} für Reste aus der Gruppe ii) stehen.

Verbindungen der Struktur (NIT 1) oder (NIT 2) können auch an Polymerketten jeglicher Art gebunden sein (vorrangig in dem Sinne, dass zumindest einer der oben genannten Reste eine derartige Polymerkette darstellt).

Mehr bevorzugt werden kontrollierte Regler für die Polymerisation von Verbindungen des Typs eingesetzt:
- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

US 4,581,429 A offenbart ein kontrolliert radikalisches Polymerisätionsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Blockcopolymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, lr-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Als sehr bevorzugter Herstellprozeß wird eine Variante der RAFT-Polymerisation (reversible addition-fragmentation chain transfer polymerization) durchgeführt. Der Polymerisationsprozeß ist z. B. in den Schriften WO 98/01478 A1 und WO 99/31144 A1 ausführlich beschrieben. In einer sehr vorteilhaften Variante werden beispielsweise die Trithiocarbonate (TTC 1) und (TTC 2) oder die Thioverbindungen (THI 1) und (THI 2) zur Polymerisation eingesetzt, wobei φ ein Phenylring, der unfunktionalisiert oder durch Alkyl- oder Arylsubstituenten, die direkt oder über Ester- oder Etherbrücken verknüpft sind, funktionalisiert sein kann, oder eine Cyanogruppe sein kann, oder einen gesättigten oder ungesättgten aliphatischen Rest sein kann.

Funktionalisierungen für den Phenylring φ können beispielsweise Halogene, Hydroxygruppen, Epoxidgruppen, stickstoff- oder schwefelenthaltende Gruppen sein, ohne daß diese Liste Anspruch auf Vollständigkeit erhebt.

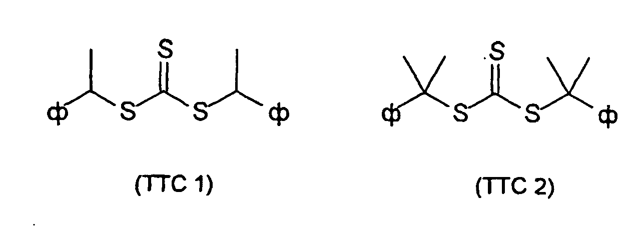

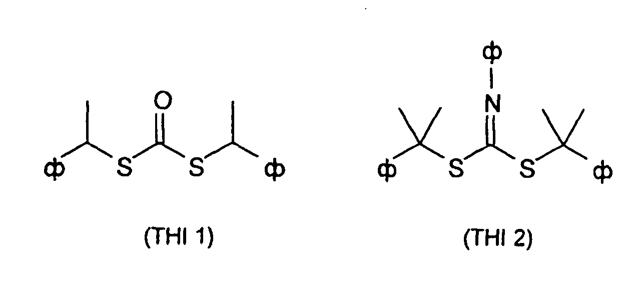

Außerdem können Thioester der allgemeinen Struktur

R^{$1}-C(S)-S-R^{$2} (THE)

zum Einsatz kommen, insbesondere, um asymmetrische Systeme herzustellen. Dabei können R^{$1} und R^{$2} unabhängig voneinander gewählt werden und R^{$1} ein Rest aus einer der folgenden Gruppen i) bis iv) und R^{$2} ein Rest aus einer der folgenden Gruppen i) bis iii) sein kann:
i) C₁- bis C₁₈-Alkyl, C₂- bis C₁₈-Alkenyl, C₂- bis C₁₈-Alkinyl, jeweils linear oder verzweigt; Aryl-, Phenyl-, Benzyl-, aliphatische und aromatische Heterozyklen.
ii) -NH₂, -NH-R^{$3}, -NR^{$3}R^{$4}, -NH-C(O)-R^{$3}, -NR^{$3}-C(O)-R^{$4}, -NH-C(S)-R^{$3}, -NR^{$3}-C(S)-R^{$4}, 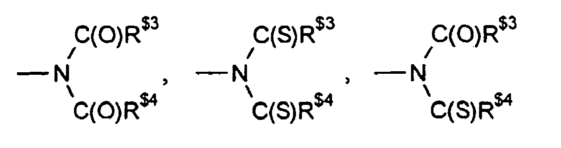 wobei R^{$3} und R^{$4} unabhängig voneinander gewählte Reste aus der Gruppe i) sind.
iii) -S-R^{$5}, -S-C(S)-R^{$5}, wobei R^{$5} ein Rest aus einer der Gruppen i) oder ii) sein kann.
iv) -O-R^{$6}, -O-C(O)-R^{$6}, wobei R^{$6} ein Rest gewählt aus einer der Gruppen i) oder ii) sein kann.

In Verbindung mit den obengenannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo- oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seinen hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodüsobutyronitril, Düsopropylpercarbonat, tert-Butylperoctoat, Benzpinacol. In einer sehr bevorzugten Variante wird als radikalischer Initiator 1,1'-Azo-bis-(cyclohexylnitril) (Vazo 88®, DuPont®) oder 2,2-Azo-bis-(2-methylbutannitril) (Vazo 67®, DuPont®) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden.
Das Lösemittel wird bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

Zur Weiterentwicklung der Erfindung können den blockcopolymerhaltigen Haftklebemassen Klebharze beigemischt werden. Prinzipiell lassen sich alle in dem entsprechenden Polyacrylatmittelblock P(B) löslichen Harze verwenden. Geeignete Klebharze umfassen unter anderem Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatisch-aromatische Kohlenwasserstoffharze, um nur einige zu nennen. Vorrangig werden Harze gewählt, die vorzugsweise mit dem Elastomerblock verträglich sind. Der Gewichtsanteil der Harze am Blockcopolymer beträgt typischerweise bis zu 40 Gew. %, mehr bevorzugt bis zu 30 Gew. %.
Für eine spezielle Art der Ausführung der Erfindung können auch Harze verwendet werden, die mit dem Polymerblock P(A) verträglich sind.

Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden.

Generell ist bei den Zusatzstoffen, wie Harzen, Füller und Weichmacher zu beachten, dass diese das Ausgasungsverhalten nicht verschlechtern. Es sollten somit bevorzugt Substanzen eingesetzt werden, die auch unter hoher Temperaturbelastung eine sehr geringe Flüchtigkeit besitzen.

Bevorzugt wird die innere Festigkeit (Kohäsion) der Haftklebemasse durch die physikalische Vernetzung der Polymerblöcke P(A) erzeugt. Die so erhaltene physikalische Vernetzung ist typischerweise thermoreversibel. Für eine nichtreversible Vernetzung können die Haftklebemassen zusätzlich chemisch vernetzt werden. Hierzu können die acrylatblockcopolymerhaltigen Haftklebemassen, welche für die erfindungsgemäßen reversiblen Systeme eingesetzt werden, optional verträgliche Vernetzersubstanzen enthalten. Als Vemetzer eignen sich z. B. Metallchelate, multifunktionelle Isocyanate, multifunktionelle Amine oder multifunktionelle Alkohole. Auch multifunktionelle Acrylate lassen sich vorteilhaft als Vemetzer für eine actinische Bestrahlung verwenden.

Zur optionalen Vernetzung mit UV-Licht werden den polyacrylathaltigen Blockcopolymeren, welche in den erfindungsgemäßen Systemen zum Einsatz kommen, UV-absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte α-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden.

Prinzipiell ist es auch möglich, die erfindungsgemäß eingesetzten Haftklebemassen mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

### Produktaufbauten der haftklebrigen Blattmaterialien

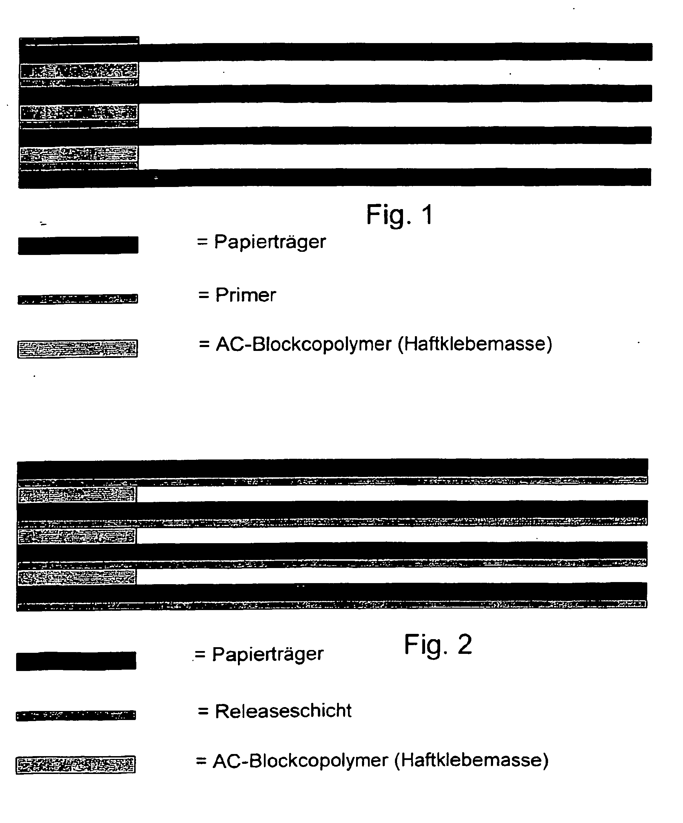

Die Figuren 1 bis 3 zeigen verschiedene Produktaufbauten der erfindungsgemäßen Haftklebeartikel. Die Anzahl der über einander laminierten haftklebrigen Blätter ist variabel und beträgt vorzugsweise zumindestens 2.

Nach Figur 1 wird der Papierträger mit einem Primer ausgestattet, der die Verankerung der Haftklebemasse auf dem Papier verbessert. Hier können eine Vielzahl dem Fachmann geläufiger Primermaterialien eingesetzt werden, wie z.B. Primer auf Basis von Styrolblockcopolymeren. Der Primer wird nur in einem Teilbereich auf den Papierträger beschichtet. Die Fläche ist in einer sehr bevorzugten Auslegung mit der Haftklebemassenfläche identisch.

Nach Figur 2 wird zur leichteren Trennung der einzelnen haftklebrigen Blätter die Rückseite mit einem Releasematerial ausgestattet. Als Releasematerialien eignen sich alle dem Fachmann bekannten Materialien, besonders bevorzugt auf Polysilikonen oder auf fluorierten Kohlenwasserstoffen basierende Systeme. Es können aber auch alle anderen bekannten Trennlacke eingesetzt werden. Die haftklebrigen Blätter können vollflächig oder nur in einem Teilbereich mit dem Trennlack ausgestattet werden.

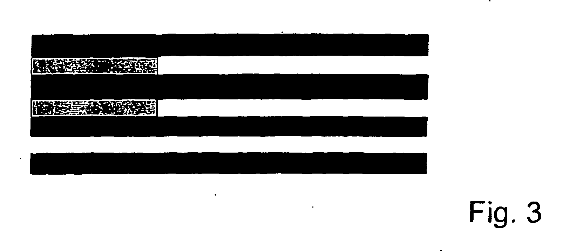

Nach Figur 3 wird die Haftklebemasse direkt auf dem Papierträger beschichtet. In diesem Fall ist die Verankerung genügend hoch, so dass sich die haftklebrigen Papierblätter rückstandsfrei entfernen lassen.
Neben den oben ausgeführten Versionen können aber auch Kombinationen aus den einzelnen Produktvarianten hergestellt werden. So kann z.B. der Papierträger sowohl mit einem Primer als auch mit einem Trennlack auf der gegenüber liegenden Seite ausgestattet sein und anschließend das haftklebrige Blockcopolymer auf die Primerschicht beschichtet werden.

Als Papierträger lassen sich alle bekannten Papiermaterialien einsetzen. Neben graphischen Papieren, lassen sich farbige Papiere, Tiefendruckpapiere, Offsetpapiere, Druckpapiere allgemeiner Art oder Transparentpapiere einsetzen, wobei diese Aufzählung keinen Anspruch auf Vollständigkeit besitzt. Weiterhin können sich auch die Papierträger durch das Flächengewicht unterscheiden, wobei bevorzugt Flächengewichte zwischen 30 und 250 g/m² eingesetzt werden. Des weiteren werden ein- oder zweiseitig gestrichene Papiere, ein-, zwei oder dreilagige Papiere, glänzend, matte oder ultradünne Papiere, holzhaltige Papiere oder Papier basierend auf einem ökologischen Fasermix, Recyclingpapiere, Papiere mit verschiedenen Füllstoffen oder Papiere auf Basis von Zellstoffen verwendet. Papierhersteller für die obengenannten Papiere sind z.B. die Firmen Steinbeis, Neusiedler, Zanders oder Meerssen & Palm.

Die oben beschriebenen hergestellten haftklebrigen Blattmaterialien lassen sich als Notizfixzettel einsetzen. Die Papierträgermaterialien lassen sich gut beschriften und durch die haftklebrige Ausstattung auf verschiedenen Untergründen temporär verkleben.
Durch die Zusammensetzung der Haftklebemassen ist das haftklebrige Blattmaterial rückstandsfrei und leicht reversibel von den verschiedensten Untergründen zu entfernen.

Weiterhin können die beschriebenen hergestellten haftklebrigen Blattmaterialien für medizinische Zwecke eingesetzt werden, so z.B. zur Verklebung auf der Haut.

### Prüfmethoden

### A. Klebkraft

Die Prüfung der Schälfestigkeit (Klebkraft) erfolgte gemäß PSTC-1. Die Herstellung der Klebkraftmuster erfolgte durch Beschichtung der Polymere aus Lösung auf ein graphisches Papier der Fa. Paper Union GmbH & CO. KG, Kompass Copy TCF office, 80 g/m² mit anschließender Trocknung bei 100°C. Der Masseauftrag nach dem Trocknungsvorgang betrug 10 g/m². Ein 2 cm breiter Streifen dieses Musters wird auf eine mit dem identischen Papier versehende Stahlplatte durch einmaliges Überrollen mittels einer 2 kg Rolle verklebt. Die Platte wird eingespannt und der haftklebrige Papierstreifen über sein freies Ende an einer Zugprüfmaschine unter einem Schälwinkel von 180° mit einer Geschwindigkeit von 300 mm/min abgezogen.

### B. Gelpermeationschromatograpie (GPC)

Die Bestimmung des mittleren Molekulargewichtes M_{w} und der Polydispersität PD erfolgte durch Gelpermeationschromatographie. Als Eluent wurde THF mit 0.1 Vol.-% Trifluoressigsäure eingesetzt. Die Messung erfolgte bei 25°C. Als Vorsäule wurde PSS-SDV, 5 µ, 10³ Å, ID 8.0 mm x 50 mm verwendet. Zur Auftrennung wurden die Säulen PSS-SDV, 5 µ, 10³ sowie 10⁵ und 10⁶ mit jeweils ID 8.0 mm x 300 mm eingesetzt. Die Probenkonzentration betrug 4 g/l, die Durchflußmenge 1.0 ml pro Minute. Es wurde gegen Polystyrol-Standards gemessen.

### Prüfmusterherstellung

### Herstellung eines RAFT-Reglers:

Die Herstellung des Reglers Bis-2,2'-phenylethyltrithiocarbonats (Formel TTC-1) erfolgte ausgehend von 2-Phenylethylbromid mit Dischwefelkohlenstoff und Natriumhydroxid nach einer Vorschrift von Synth. Comm., 1988, 18 (13), 1531. Ausbeute 72 %. ¹H-NMR (CDCl₃), δ: 7,20-7,40 ppm (m, 10 H); 3,81 ppm (m, 1 H); 3,71 ppm (m, 1 H); 1,59 ppm (d, 3 H); 1,53 ppm (d, 3 H).

### Herstellung von Polystyrol (PS):

In einem für die radikalische Polymerisation konventionellem 2 L Reaktor werden unter Stickstoffatmosphäre 362 g Styrol und 3,64 g Regler Bis-2,2'-phenylethyltrithiocarbonat vorgelegt. Es wird auf 110 °C Innentemperatur erhitzt und mit 0,15g Vazo 67® (DuPont) initiiert. Nach 10 Stunden Reaktionszeit werden 100 g Toluol hinzugegeben. Nach 24 Stunden Reaktionszeit wird mit weiteren 0,1 g Vazo 67® initiiert und weitere 24 Stunden polymerisiert. Während der Polymerisation steigt die Viskosität merklich an. Zur Kompensation werden 150 g Toluol als Endverdünnung nach 48 Stunden hinzugegeben.
Zur Aufreinigung wurde das Polymer in 4,5 Liter Methanol gefällt, über eine Fritte abfiltriert und anschließend im Vakuumtrockenschrank getrocknet.

Die Durchführung der Gelpermeationschromatographie (Test B) gegen Polystyrol Standards ergab M_{N} = 29.300 g/mol und M_{w} = 35.500 g/mol.

### Beispiel 1:

In einem zweiten Schritt wurden 48.5 g Polystyrol PS in einem für radikalische Polymerisationen konventionellen Reaktor mit 64 g Stearylmethacrylat, 256 g 2-Ethylhexylacrylat und 100 g Aceton vermischt. Nach einer halbe Stunde Inertisieren unter Stickstoffgas wird auf 60 °C Innentemperatur erhitzt und mit 0,1g Vazo 67® (DuPont) gelöst in 5 g Aceton initiiert. Nach 4 Stunden Reaktionszeit wird mit weiteren 0,1 g Vazo 67® gelöst in 10 g Aceton initiiert. Nach 10 Stunden Reaktionszeit wird mit 150 g Aceton verdünnt. Die Polymerisation wird nach 28 Stunden Reaktionszeit durch Abkühlen abgebrochen und durch Zugabe mit Siedegrenzenbenzin 60/95 auf 30 % herunter- verdünnt.
Die Durchführung der Gelpermeationschromatographie (Test B) gegen Polystyrol Standards ergab M_{N} = 99.700 g/mol und M_{w} = 208.000 g/mol.

### Beispiel 2:

In einem zweiten Schritt wurden 48,5 g Polystyrol PS in einem für radikalische Polymerisationen konventionellen Reaktor mit 64 g Stearylmethacrylat, 256 g n-Butylacrylat und 100 g Aceton vermischt. Nach einer halbe Stunde Inertisieren unter Stickstoffgas wird auf 60 °C Innentemperatur erhitzt und mit 0,1g Vazo 67® (DuPont) gelöst in 5 g Aceton initiiert. Nach 4 Stunden Reaktionszeit wird mit weiteren 0,1 g. Vazo 67® gelöst in 10 g Aceton initiiert. Nach 10 Stunden Reaktionszeit wird mit 150 g Aceton verdünnt. Die Polymerisation wird nach 28 Stunden Reaktionszeit durch Abkühlen abgebrochen und durch Zugabe mit Siedegrenzenbenzin 60/95 auf 30 % herunter- verdünnt.
Die Durchführung der Gelpermeationschromatographie (Test B) gegen Polystyrol Standards ergab M_{N} = 131.000 g/mol und M_{w} = 279.000 g/mol.

### Beispiel 3:

In einem zweiten Schritt wurden 48,5 g Polystyrol PS in einem für radikalische Polymerisationen konventionellen Reaktor mit 96 g Stearylacrylat, 222,4 g 2-Ethylhexylacrylat, 1,6 g Acrylsäure und 100 g Aceton/Siedegrenzenbenzin 60/95 (1:1) vermischt. Nach einer halbe Stunde Inertisieren unter Stickstoffgas wird auf 60 °C Innentemperatur erhitzt und mit 0,15g Vazo 67® (DuPont) gelöst in 5 g Aceton initiiert. Nach 1,5 Stunden Reaktionszeit wird mit weiteren 0,15 g Vazo 67® gelöst in 5 g Aceton initiiert. Nach 3 Stunden, 4,75 Stunden, 6 Stunden und 6,5 Stunden Reaktionszeit wird mit jeweils 50 g Aceton verdünnt. Die Polymerisation wird nach 24 Stunden Reaktionszeit durch Abkühlen abgebrochen und durch Zugabe mit Siedegrenzenbenzin 60/95 auf 30 % herunterverdünnt.
Die Durchführung der Gelpermeationschromatographie (Test B) gegen Polystyrol Standards ergab M_{N} = 108.000 g/mol und M_{w} = 223.000 g/mol.

### Beispiel 4:

In einem zweiten Schritt wurden 59 g Polystyrol PS in einem für radikalische Polymerisationen konventionellen Reaktor mit 94,1 g Stearylacrylat, 174,7 g 2-Ethylhexylacrylat und 100 g Aceton/Siedegrenzenbenzin 60/95 (1:1) vermischt. Nach einer halbe Stunde Inertisieren unter Stickstoffgas wird auf 60 °C Innentemperatur erhitzt und mit 0,15g Vazo 67® (DuPont) gelöst in 5 g Aceton initiiert. Nach 1,5 Stunden Reaktionszeit wird mit weiteren 0,15 g Vazo 67® gelöst in 5 g Aceton initiiert. Nach 3,5 Stunden wird mit 50 g Aceton/Siedegrenzenbenzin 60/95 (1:1) verdünnt, nach 4,5 Stunden mit 50 g Aceton, nach 6,5 Stunden mit 70 g Aceton/Siedegrenzenbenzin 60/95 (1:1) und nach 7.5 Stunden mit 50 g Aceton. Die Polymerisation wird nach 24 Stunden Reaktionszeit durch Abkühlen abgebrochen und durch Zugabe mit Siedegrenzenbenzin 60/95 auf 30 % herunterverdünnt.
Die Durchführung der Gelpermeationschromatographie (Test B) gegen Polystyrol Standards ergab M_{N} = 112.000 g/mol und M_{w} = 237.000 g/mol.

### Ergebnisse

Nach der Prüfmusterherstellung wurde zunächst die Klebkraft der haftklebrigen Blätter nach Testmethode A bestimmt. Neben den absoluten Werten muss das haftklebrige Blatt ohne Papierausrupfer und Klebemassenrückstände von der Papieroberfläche entfernbar sein.

Die Messungen sind in Tabelle 1 zusammengefasst:

| Tabelle 1 | | |
|---|---|---|
| Beispiel | KK Papier /Test A [N/cm] | Bruchbild (Sichtprüfung) |
| 1 | 0.20 | i.O. |
| 2 | 0.22 | i.O. |
| 3 | 0.15 | i.O. |
| 4 | 0.14 | i.O. |

| | | |
|---|---|---|
| KK: Sofortklebkraft in N/cm i.O.: keine Papierausreißer und kein Masseübertrag | | |

Aus den gemessenen Werten geht hervor, dass die Haftklebeblätter alle eine relativ gering Klebkraft auf Papier aufweisen, sich gut voneinander lösen lassen und auch beim Entfernen keine Ausreißer oder Haftklebemassenreste zu beobachten sind. Dementsprechend lassen sich die Blattmuster sehr gut über einander laminieren und als haftklebriges Blattmaterial einsetzen.
Zur Herstellung eines Produktes wurden weiterhin 10 DIN A4 Blätter graphisches Papier der Fa. Paper Union GmbH & CO. KG, Kompass Copy TCF office, 80 g/m² mit einem 1.5 cm breiten Haftklebemassenfilm des Beispiels 4 einseitig beschichtet, übereinander laminiert und anschließend mit dem Haftkleberand nach oben auf die Größe 7.5 x 10 cm geschnitten, wobei der haftklebrige Teil die Größe 1.5 cm x 10 cm besaß und das obere Ende abschließt. Ein derart aufgebauter Notizblock wurde bei 50 % Luftfeuchtigkeit und 40 °C für eine Woche gelagert. Nach abgeschlossener Lagerung ließen sich noch immer die einzelnen haftklebrigen Blätter rückstandsfrei vom Block entfernen und auf unterschiedliche Untergründe verkleben, ohne dass das haftklebrige Blatt herunterfallen würde.

## Patentansprüche

1. Haftklebeartikel bestehend aus einem blatt- oder bandförmigen Träger, der auf mindestens einer Seite wenigstens teilweise mit einer druckempfindlichen Haftklebemasse auf Polyacrylatbasis beschichtet ist, **dadurch gekennzeichnet, dass** die Haftklebemasse wenigstens ein Polyacrylat-Blockcopolymer enthält, das eine Abfolge von harten Polymerblöcken [P(A)] mit einer Glasübergangstemperatur von nicht mehr als 10 °C und von weichen Polymerblöcken [P(B)] mit einer Glasübergangstemperatur von über 10 °C aufweist.

2. Haftklebeartikel nach Anspruch 1, **dadurch gekennzeichnet, dass** das Blockcopolymere zumindest eine Triblockstruktur P(A)-P(B)-P(A) und/oder P(B)-P(A)-P(B) aufweist.

3. Haftklebeartikel nach Anspruch 1 oder 2, **dadurch gekennzeichnet, dass** das Blockcopolymere weiterhin funktionelle Gruppen wenigstens eines solchen Typs aufweist, die sich in einer radikalischen Polymerisationsreaktion inert verhalten und zu einer Kohäsionssteigerung beitragen oder zu einer nachfolgenden Vernetzung der Haftklebemasse geeignet sind.

4. Haftklebeartikel nach einem der Ansprüche 1 bis 3, **dadurch gekennzeichnet, dass** der Träger auf der der Haftklebemasse abgewandten Seite wenigstens teilweise mit einer Releaseschicht versehen ist.

5. Haftklebeartikel nach einem der Ansprüche 1 bis 4, **dadurch gekennzeichnet, dass** der Träger auf der der Haftklebemasse abgewandten Seite wenigstens teilweise und vorzugsweise in einem der Haftklebemasse gegenüberliegenden Bereich mit einem haftverbessernden Primer ausgestattet ist.

6. Haftklebeartikel nach einem der Ansprüche 1 bis 5, **dadurch gekennzeichnet, dass** er blattförmig als Haftklebeblatt ausgebildet ist und innerhalb eines Blocks, insbesondere eines Notizblocks, aus wenigstens zwei aufeinanderliegenden Haftklebeblättern vorliegt.

7. Haftklebeartikel nach einem der Ansprüche 1 bis 5, **dadurch gekennzeichnet, dass** er bandförmig auf einen Kern gerollt vorliegt.

8. Haftklebeartikel nach einem der Ansprüche 1 bis 7, **dadurch gekennzeichnet, dass** der Träger aus Papier besteht, vorzugsweise aus weißem, transparentem, gefärbtem, bedrucktem oder graphischem Papier.

9. Haftklebeartikel nach einem der Ansprüche 1 bis 8, **dadurch gekennzeichnet, dass** das Blockcopolymer eine Orientierung in Vorzugsrichtung aufweist, wobei der gemessene Brechungsindex n_{MD} größer ist als der in einer senkrecht zur Vorzugsrichtung gemessene Brechungsindex n_{CD} und der gemessene Unterschied Δn = n_{MD} - n_{CD} zumindestens 1•10⁻⁵ beträgt.

## Claims

1. Pressure-sensitive adhesive article composed of a support in sheet or strip form coated on at least one side at least partly with a polyacrylate-based pressure-sensitive adhesive, **characterized in that** the pressure-sensitive adhesive comprises at least one polyacrylate block copolymer that has a succession of hard polymer blocks [P(A)] having a glass transition temperature of not more than 10°C and of soft polymer blocks [P(B)] having a glass transition temperature of more than 10°C.

2. Pressure-sensitive adhesive article according to Claim 1, **characterized in that** the block copolymer has at least one triblock structure P (A) -P (B) -P (A) and/or P (B) -P (A) -P (B) .

3. Pressure-sensitive adhesive article according to Claim 1 or 2, **characterized in that** the block copolymer additionally has functional groups at least of a type which behave inertly in a free-radical polymerization reaction and contribute to an increasing cohesion or are suitable for subsequent crosslinking of the pressure-sensitive adhesive.

4. Pressure-sensitive adhesive article according to one of Claims 1 to 3, **characterized in that** the support on the side facing away from the pressure-sensitive adhesive has been provided at least partly with a release coat.

5. Pressure-sensitive adhesive article according to one of Claims 1 to 4, **characterized in that** the support on the side facing away from the pressure-sensitive adhesive has been provided at least partly, and preferably in a region opposite the pressure-sensitive adhesive, with an adhesion-promoting primer.

6. Pressure-sensitive adhesive article according to one of Claims 1 to 5, **characterized in that** it is formed in sheet form as a pressure-sensitive adhesive sheet and is situated within a pad, especially a notepad, comprising at least two pressure-sensitive adhesive sheets lying one atop another.

7. Pressure-sensitive adhesive article according to one of Claims 1 to 5, **characterized in that** it is in the form of a strip rolled onto a core.

8. Pressure-sensitive adhesive article according to one of Claims 1 to 7, **characterized in that** the support is composed of paper, preferably of white, transparent, coloured, printed or graphics paper.

9. Pressure-sensitive adhesive article according to one of Claims 1 to 8, **characterized in that** the block copolymer has an orientation in a preferential direction, the refractive index measured, n_{MD}, being greater than the refractive index n_{CD} measured in a direction perpendicular to the preferential direction, and the measured difference Δn = n_{MD} - n_{CD} amount to at least 1 • 10⁻⁵.

## Revendications

1. Objet auto-adhésif constitué d'un support en forme de feuille ou de ruban dont au moins une partie d'une face est recouverte d'une pâte auto-adhésive sensible à la pression, à base de polyacrylate, **caractérisé en ce que** la pâte auto-adhésive contient au moins un copolymère séquencé de polyacrylate qui présente une succession de blocs polymères durs [P(A)] dont la température de transition vitreuse n'est pas supérieure à 10°C et de blocs polymères mous [P(B)] dont la température de transition vitreuse est supérieure à 10°C.

2. Objet auto-adhésif selon la revendication 1, **caractérisé en ce que** le copolymère séquencé présente au moins une structure en trois blocs P(A)-P(B)-P(A) et/ou P(B)-P(A)-P(B).

3. Objet auto-adhésif selon la revendication 1 ou 2, **caractérisé en ce que** le copolymère séquencé présente en outre des groupes fonctionnels d'au moins un autre type qui ont un comportement inerte dans une réaction de polymérisation radicalaire, et qui contribuent à augmenter la cohésion ou conviennent pour une réticulation ultérieure de la pâte auto-adhésive.

4. Objet auto-adhésif selon l'une quelconque des revendications 1 à 3, **caractérisé en ce que** le support est doté sur au moins une partie de son côté non tourné vers la pâte auto-adhésive d'une couche de libération.

5. Objet auto-adhésif selon l'une quelconque des revendications 1 à 4, **caractérisé en ce que** sur au moins une partie de son côté non tourné vers la pâte auto-adhésive et de préférence dans une zone située face à la pâte auto-adhésive, le support est doté d'une couche de fond qui améliore l'adhérence.

6. Objet auto-adhésif selon l'une quelconque des revendications 1 à 5, **caractérisé en ce qu'**il est configuré en feuilles auto-adhésives et se présente dans un bloc, en particulier un bloc-notes constitué d'au moins deux feuilles auto-adhésives superposées.

7. Objet auto-adhésif selon l'une quelconque des revendications 1 à 5, **caractérisé en ce qu'**il se présente sous la forme d'un ruban enroulé sur une âme.

8. Objet auto-adhésif selon l'une quelconque des revendications 1 à 7, **caractérisé en ce que** le support est constitué de papier, de préférence de papier blanc, transparent, coloré, imprimé ou graphique.

9. Objet auto-adhésif selon l'une quelconque des revendications 1 à 8, **caractérisé en ce que** le copolymère séquencé présente une orientation dans une direction préférentielle, l'indice de réfraction n_{MD} mesuré dans la direction préférentielle étant supérieur à l'indice de réfraction n_{CD} mesuré dans une direction perpendiculaire à la direction préférentielle, la différence mesurée Δn = n_{MD} - n_{CD} étant d'au moins 1×10⁻⁵.
